# EUROPÄISCHE PATENTSCHRIFT

(11) **EP 3 609 674 B1**
(45) Veröffentlichungstag und Bekanntmachung des Hinweises auf die Patenterteilung: **13.07.2022**
(21) Anmeldenummer: 18718773.7
(22) Anmeldetag: 12.04.2018
(51) Int. Cl.: B29C 49/48, B29C 49/06

(54) **ANPASSBARE BLASFORM**
ADAPTABLE BLOW MOLD
MOULE DE SOUFFLAGE PERSONNALISABLE

(30) Priorität: 12.04.2017 DE 102017107950
(43) Veröffentlichungstag der Anmeldung: 19.02.2020
(60) Teilanmeldung: 22174188.7
(73) Patentinhaber: Krones AG, 93073 Neutraubling (DE)
(72) Erfinder: GELTINGER, Florian, 93073 Neutraubling (DE)
(74) Vertreter: Bittner, Bernhard
(86) Internationale Anmeldenummer: PCT/EP2018/059402
(87) Internationale Veröffentlichungsnummer: WO 2018/189300

(56) Entgegenhaltungen:
- US-A1- 2008 181 982
- US-A1- 2012 161 349
- US-A1- 2014 004 219
- US-A1- 2015 132 430
- US-A1- 2015 306 828
- US-A1- 2015 343 696

## Beschreibung

Die vorliegende Erfindung bezieht sich auf eine Blasform zum Umformen von Kunststoffvorformlingen zu Kunststoffbehältnissen. Aus dem Stand der Technik ist es bekannt, dass Kunststoffvorformlinge zunächst erwärmt werden und anschließend in einem erwärmten Zustand einer Blasform zugeführt werden. Innerhalb dieser Blasform werden diese Kunststoffvorformlinge mit einem gasförmigen Medium und insbesondere mit Druckluft beaufschlagt, um so geblasen zu werden. Zu diesem Zweck werden im Stand der Technik Blasformen eingesetzt, die sich üblicherweise aus mehreren Bestandteilen zusammensetzen. Diese Blasformen weisen üblicherweise ein Bodenteil sowie zwei Seitenteile auf, welche gemeinsam einen Hohlraum ausbilden, innerhalb dessen die Kunststoffvorformlinge zu den Kunststoffbehältnissen expandiert werden. Falls mit Hilfe einer Blasformmaschine unterschiedliche Behältnisse geblasen werden sollen, ist es erforderlich, die einzelnen Blasformen einer Blasformmaschine auszuwechseln. Dies ist bisweilen ein relativ umständlicher Prozess.

In jüngerer Zeit sind aus dem Stand der Technik auch sogenannte Wechselroboter bekannt geworden, welche halb- oder vollautomatisch einen Wechsel von Blasformen erledigen. Zu diesem Zweck weisen die Blasformen Elemente und dergleichen auf, welche einen Wechsel mittels Wechselroboter überhaupt erst ermöglichen, etwa Elemente die vom Robotergreifer gegriffen werden, um die Blasform austauschen zu können.

Andererseits sind jedoch auch Maschinen bekannt, bei denen dieser Wechsel manuell vorgenommen wird.

Die Patentschriften US2012/161349A1, US2015/343696A1, US2008/181982A1, US2015/306828A1, US2015/132430A1 und US2014/004219A1 erläutern den technischen Hintergrund der Erfindung.

Bei den Blasformen nach dem Stand der Technik muss sich ein Kunde bzw. Hersteller von Anfang an auf ein Wechselverfahren festlegen, das heißt beispielsweise auf einen automatischen Wechsel der Blasformen oder auf einen manuellen Blasformwechsel. Eine spätere Nachrüstung bzw. ein Umbau der Formen für den manuellen Wechsel auf Formen für automatischen Wechsel ist bislang nicht möglich. Auch wäre es möglich, die jeweilige Blasform grundsätzlich in der aufwändigeren Form auszugestalten, welche für einen automatischen Wechsel geeignet ist. Dies würde jedoch unabhängig vom späteren Anwendungsfall zu Mehrkosten in Folge von zusätzlichen Anbauteilen führen.

Der vorliegenden Erfindung liegt daher die Aufgabe zugrunde, eine variabel einsetzbare Blasform zur Verfügung zu stellen. Diese Aufgabe wird erfindungsgemäß durch den Gegenstand des unabhängigen Patentanspruchs erreicht. Vorteilhafte Ausführungsformen und Weiterbildungen sind Gegenstand der Unteransprüche.

Eine erfindungsgemäße Blasform zum Umformen von Kunststoffvorformlingen zu Kunststoffbehältnissen weist ein Bodenteil auf, ein erstes Seitenteil und ein zweites Seitenteil, wobei dieses Bodenteil mit den Seitenteilen in einem zusammengesetzten Zustand der Blasform einen Hohlraum ausbildet, innerhalb dessen die Kunststoffvorformlinge zu den Kunststoffbehältnissen expandierbar sind.

Erfindungsgemäß weist wenigstens ein Element der Blasform einen ersten Befestigungsabschnitt auf, an dem ein erstes Adapterelement anbringbar ist, welches Adapterelement dazu geeignet und bestimmt ist, einen Wechsel der Blasform (insbesondere eine Demontage von einem Träger oder eine Montage an einem Träger) manuell und/oder halbautomatisch und/oder automatisch und/oder robotergestützt durchzuführen und/oder welches Adapterelement insbesondere zu einem Greifen der Blasform mittels einer Robotereinrichtung dient.

Dabei ist dieser Befestigungsabschnitt derart ausgebildet, dass dieses Adapterelement lösbar an diesem Befestigungsabschnitt anbringbar ist und dieser Befestigungsabschnitt ist weiterhin derart ausgebildet, dass die Blasform sowohl mit diesem Adapterelement als auch ohne dieses Adapterelement an einer Umformungseinrichtung zum Umformen von Kunststoffvorformlingen zu Kunststoffbehältnissen angeordnet werden kann.

Genauer gesagt ist es möglich die Blasform sowohl mit als auch ohne Adapterelement an einer Umformungsstation zum Umformen von Kunststoffvorformlingen zu Kunststoffbehältnissen und insbesondere Kunststoffflaschen anzubringen. Diese Umformungsstation weist bevorzugt zwei Seitenteilträger auf, an denen die Seitenteile der Blasform mittelbar (mit einer Formträgerschale zwischen Formträger und Blasform) oder unmittelbar (Blasform ist direkt an dem Formträger angeordnet) montierbar sind. Bevorzugt weist diese Umformungsstation auch einen Bodenteilträger auf, an dem das Bodenteil der Blasform montierbar ist. Diese Seitenteilträger sind bezüglich einander und bezüglich einer vorgegebenen Schwenkachse zum Öffnen und Schließen der Blasform schwenkbar. Daneben weisen diese Umformungsstationen bevorzugt auch eine Beaufschlagungseinrichtung auf, um die Kunststoffvorformlinge mit Druckluft zu beaufschlagen.

Unter einem zusammengesetzten Zustand der Blasform wird insbesondere in einem Arbeitsbetrieb ein geschlossener Zustand der Blasform verstanden, in dem die Seitenteile gemeinsam mit dem Bodenteil den besagten Hohlraum ausbilden. So kann beispielsweise eine Innenkontur dieser Seitenteile und des Bodenteils an eine Kontur eines herzustellenden Behältnisses angepasst sein.

Bevorzugt ist das Adapterelement welches dazu geeignet und bestimmt ist, einen Wechsel der Blasform zu ermöglichen aus einer Gruppe von Adapterelementen ausgewählt, welche einen Transport der Blasform mittels einer Robotereinrichtung ermöglichen, Adapterelementen, welche ein automatisches und/oder Robotergestütztes Lösen von Befestigungsmechanismen ermöglichen und Adapterelementen welche einen insbesondere formschlüssigen Zusammenhalt von Elementen der Blasform ermöglichen.

Durch die erfindungsgemäße Vorgehensweise ist eine Umstellung der Blasformeinrichtung sowohl auf einen manuellen Blasformwechsel als auch auf einen robotergestützten Blasformwechsel möglich. Bevorzugt ist der Befestigungsabschnitt so platziert, dass die Blasform mit oder ohne Adapter in eine Umformungseinrichtung einbaubar ist. Ohne das Adapterelement ist die Blasform dabei bevorzugt ausgelegt auf einen manuellen Blasformwechsel. Mit einem Adapterelement ist die Blasform bevorzugt für den automatischen Blasformwechsel ausgelegt.

Weiterhin weist bevorzugt die Blasform eine oder mehrere Befestigungseinrichtungen auf, um die Seitenteile und/oder das Bodenteil an einem Seitenteilträger und/oder an einem Bodenteilträger zu befestigen.

Es wird daher vorgeschlagen, dass die erfindungsgemäße Blasform modular aufgebaut ist. Die Blasform weist eine Grundform auf, welche insbesondere für einen manuellen Formenwechsel gedacht ist. Dabei weist jedoch diese Grundform bereits alle Schnittstellen auf, um die Adapterelemente anzubringen. Bei einer weiteren bevorzugten Ausführungsform weist die Befestigungseinrichtung und insbesondere der Befestigungsabschnitt Schnittstellen auf, welche aus einer Gruppe von Schnittstellen ausgewählt sind, welche Flanschflächen, Gewinde, Zentrierdurchmesser, Absteckbohrungen und dergleichen enthält. Auf diese Weise können an diese Grundform ohne eine Modifikation des Formengrundkörpers Anbauteile, wie die hier beschriebenen Adapterelemente, montiert werden.

Auf diese Weise kann durch das Anbringen dieser Anbauteile die Form für einen vollautomatischen Formenwechsel und insbesondere einen Formenwechsel mittels Roboter erweitert werden. Vorteilhaft weisen diese Adapterelemente bzw. Anbauteile mehrere Funktionen auf. Diese Elemente sind dabei aus einer Gruppe von Elementen ausgewählt, welche Elemente, um die Form in einer Aufnahme zu fixieren, Elemente, um eine formschlüssige Verbindung der Seitenteile mit der Bodenform zu ermöglichen, Elemente, um die Blasform in einer Aufnahme vertikal zu positionieren, Elemente, um die Form in der Aufnahme in der Winkelstellung zu positionieren, Elemente, um eine Schnittstelle zu einem Robotergreifer zu bilden und Elemente, um einen automatischen Anschluss von Medienzuleitungen herzustellen, enthalten.

Bei einer weiteren vorteilhaften Ausführungsform weist wenigstens ein Seitenteil der Blasform den Befestigungsabschnitt auf. Bevorzugt ist wenigstens ein Befestigungsabschnitt und sind bevorzugt mehrere Befestigungsabschnitte und besonders bevorzugt alle Befestigungsabschnitte derart gewählt bzw. gestaltet, dass die daran angeordneten Adapterelemente sich in einem normalen Arbeitsbetrieb der Blasform nicht kontaktieren. Bevorzugt sind die Befestigungsabschnitte auch derart ausgeführt.

Bei einer weiteren vorteilhaften Ausführungsform ermöglicht das Adapterelement ein Wechseln der Blasform durch eine Robotereinrichtung. Bevorzugt kann dabei das Adapterelement derart ausgestaltet sein, dass es auch eine ungenauere Positionierung der Form durch eine Robotereinrichtung erlaubt. Dabei ist es möglich, dass Zentriermittel vorgesehen sind, welche die Blasform gegenüber den Seitenteilträgern zentrieren. Bei diesen Zentriermitteln kann es sich beispielsweise um Fangschrägen handeln, welche die Blasform und/oder der Formträger gegenüber dem jeweiligen anderen Bauteil zentrieren. Diese Zentriermittel und insbesondere diese Fangschrägen können dabei sowohl und bevorzugt an den Seitenteilträgern angeordnet sein als auch an den Seitenteilen.

Dies bedeutet, dass ein entsprechendes Adapterelement an diesem Befestigungsabschnitt des Seitenteils angeordnet werden kann. Bevorzugt weist auch das zweite Seitenteil der Blasform einen Befestigungsabschnitt auf, um daran ein Adapterelement anzuordnen. Auf diese Weise können die Seitenteile einzeln umgestellt werden von einer manuellen Variante auf eine roboterfähige Variante.

Bei einer weiteren vorteilhaften Ausführungsform weist das Bodenteil und/oder ein Seitenteil und bevorzugt wenigstens ein Seitenteil und besonders bevorzugt beide Seitenteile einen zweiten Befestigungsabschnitt auf, an dem ein zweites Adapterelement anbringbar ist. Auf diese Weise kann auch das Bodenteil umgestellt werden zwischen einer manuellen Variante und einer Variante, welche durch Roboter betätigt bzw. behandelt werden kann. Dieses zweite Adapterelement kann dabei auch dazu dienen, um einzelne Teil der Blasform, wie insbesondere die Seitenteile und das Bodenteil zeitweise aneinander zu halten, insbesondere während eines Transports der Blasform mittels einer Robotereinrichtung. Dabei ist es denkbar, dass dieses Adapterelement einen Befestigungsmechanismus aufweist, der im Arbeitsbetrieb nicht wirkt, sondern nur, wenn die Blasform transportiert werden soll.

Bevorzugt ist eine Gestalt der Adapterelemente an eine Gestalt der Grundform bzw. der Blasform angepasst. So können bevorzugt die Adapterelemente derart ausgeführt sein, dass sie in komplementäre Gegenflächen der Blasform bzw. des Formengrundkörpers eingreifen. Bei einer bevorzugten Ausführungsform können die Befestigungsabschnitte stufenförmige ausgebildet sein und/oder einen stufenförmigen Absatz aufweisen, an dem die Adapterelemente angeordnet bzw. befestigt werden.

Bei einer weiteren vorteilhaften Ausführungsform ist wenigstens ein Adapterelement mittels wenigstens einer Schraubverbindung an den ihm zugeordneten Befestigungsabschnitt anbringbar. Auf diese Weise ist es möglich, dass das Adapterelement lösbar an dem jeweiligen Grundkörper bzw. dem Blasformteil, beispielsweise einem Seitenteil oder dem Bodenteil zu befestigen ist.

Bei einer weiteren vorteilhaften Ausführungsform weist wenigstens ein Befestigungsabschnitt eine kreissegmentförmige Anlagefläche zum Anlegen des ersten Adapterelements auf. Bei einer weiteren vorteilhaften Ausführungsform sind diese Adapterelemente derart ausgeführt, dass eine formschlüssige Verbindung für die jeweilige Funktion entsteht. Bei der Funktion kann es sich, wie oben erwähnt, beispielsweise um das Fixieren der Blasform und das Zentrieren der Blasform, um das Handling der Form mittels eines Roboters und dergleichen handeln.

Bei einer weiteren vorteilhaften Ausführungsform ist wenigstens ein Befestigungsabschnitt in einem oberen Drittel der Blasform, bevorzugt in einem oberen Viertel der Blasform angeordnet. Dies bedeutet, dass bevorzugt auch das Adapterelement in dem besagten oberen Bereich der Blasform angeordnet wird. Bei einer weiteren vorteilhaften Ausführungsform ist auch wenigstens ein Befestigungsabschnitt in einem unteren Drittel der Blasform, bevorzugt in einem unteren Viertel der Blasform angeordnet. Bei dieser Ausgestaltung ist es möglich, dass ein weiteres Adapterelement in einem unteren Bereich der Blasform angeordnet wird.

Bei einer weiteren vorteilhaften Ausführungsform weist die Blasform wenigstens einen dritten Befestigungsabschnitt auf, um an einer Umfangsfläche wenigstens eines Seitenteils ein drittes Adapterelement zu befestigen. Dieses dritte Adapterelement kann beispielsweise dazu dienen, um die Seitenteile am Außenumfang greifen zu können. Daneben kann dieses dritte Adapterelement auch dazu dienen, um beispielsweise über einen zusätzlichen Anschluss eine Befestigung zwischen dem Seitenteilträger und dem Seitenteil zu lösen. So kann beispielsweise über dieses dritte Adapterelement ein Pneumatikanschluss bzw. eine Pneumatikverbindung hergestellt werden.

Diejenigen Schnittstellen bzw. Adapterelemente, die als Schnittstelle zu einem Robotergreifer fungieren, sind damit bevorzugt an einem oberen Drittel der Blasform angebracht.

Bei einer weiteren vorteilhaften Ausführungsform sind die Adapterelemente aus einem gehärteten Material hergestellt, insbesondere aus einem gehärteten Stahl. Auf diese Weise kann ein entsprechender Verschleißschutz für das Roboterhandling sichergestellt werden.

Bei einer weiteren vorteilhaften Ausführungsform ist wenigstens ein Adapterelement dazu geeignet und bestimmt, eine formschlüssige Verbindung der beiden Seitenteile mit der Bodenform bzw. dem Bodenteil herzustellen. Bevorzugt sind derartige Adapterelemente derart ausgeführt, dass diese während des eigentlichen Behälterherstellungsprozesses nicht miteinander in Kontakt treten, sondern erst dann, wenn ein Roboter die Blasform bzw. das Formenpaket aufnimmt.

So ist es bevorzugt möglich, dass eine Kontur dieser formschlüssigen Elemente direkt in ein formgebendes Bauteil der Formenseitenteile und/oder des Bodenteils integriert ist. Auf diese Weise können Mehrkosten durch zusätzliche Bauteile vermieden werden. So ist es beispielsweise möglich, dass das Adapterelement, das die formschlüssige Verbindung zwischen dem Bodenteil und den Seitenteilen herstellt, zweiteilig ausgebildet ist, beispielsweise zwei Halbkreissegmente aufweist. Diese können an den Seitenteilen befestigt werden, kontaktieren sich jedoch bevorzugt erst, wenn die Blasform durch einen Roboter entnommen werden soll.

Bei einer bevorzugten Ausgestaltung werden die formschlüssigen Verbindungen, insbesondere diejenigen, welche Boden und Seitenformen nur im Wechselprozess mit dem Roboter verbinden, direkt in die formgebenden Bauteile (bei denen es sich insbesondere um Alubauteile handelt) von Seitenteil und Bodenform integriert. Dadurch kann auf zusätzliche Bauteile verzichtet werden und die Herstellkosten bleiben niedrig. Diese formschlüssige Verbindung wirkt bevorzugt nur im Wechselprozess, wenn die Seitenteile mit dem Boden als Paket entnommen werden, nicht jedoch im Produktionsprozess.

Im Produktionsprozess hat diese formschlüssige Verbindung bevorzugt ein vorgegebenes Spiel (Verschleißschutz) und die formschlüssige Verbindung zur Übertragung der aus dem Blasprozess entstehenden Kräfte erfolgt bevorzugt über zusätzliche gehärtete Elemente unterhalb der Bodentasse. Bevorzugt sind daher Verbindungsmechanismen vorgesehen, welche eine mechanische Verbindung zwischen Bestandteilen der Blasform nur in einem Montage und/oder Demontagebetrieb der Vorrichtung herstellen, nicht aber in einem Arbeitsbetrieb der Vorrichtung.

Bei einer weiteren vorteilhaften Ausführungsform ist daher wenigstens ein Adapterelement zweiteilig ausgebildet.

Bei einer weiteren vorteilhaften Ausführungsform weist die Blasformanordnung ein zweites oder weiteres Adapterelement auf, welches beabstandet zu dem ersten Adapterelement an der Blasform angeordnet werden kann.

Insbesondere sind dabei die Adapterelemente in einer Längsrichtung der Blasform voneinander beabstandet.

Weitere Vorteile und Ausführungsformen ergeben sich aus den beigefügten Zeichnungen:
Darin zeigen:
- Fig. 1a: Eine erfindungsgemäße Blasform;
- Fig. 1b: Adapterelemente für die in Figur 1a gezeigte Blasform;
- Fig. 1c: Eine Blasform mit daran angeordneten Adapterelementen;
- Fig. 2: Ein Blasformseitenteil nach dem Stand der Technik;
- Fig. 3: eine schematische Darstellung einer Blasform.

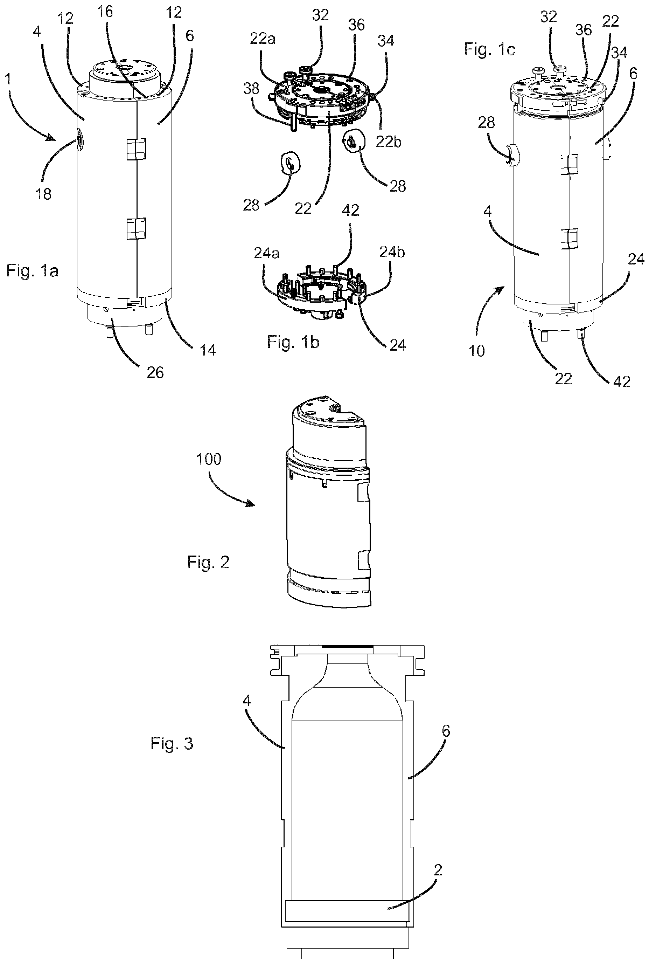

Figur 1a zeigt eine Darstellung einer erfindungsgemäßen Blasform 1. Diese Blasform 1 weist dabei ein erstes Seitenteil 4 und ein zweites Seitenteil 6 auf. Daneben weist die Blasform ein im Inneren befindliches Bodenteil auf. Diese Seitenteile 4,6 und das Bodenteil 2 bilden zusammen den Hohlraum aus, innerhalb dessen die Kunststoffvorformlinge expandiert werden.

Das Bezugszeichen 12 kennzeichnet einen Befestigungsabschnitt, der jeweils an den beiden Seitenteilen angeordnet ist. Dieser Befestigungsabschnitt ist hier als ringförmiger (und stufenförmiger) Rand ausgebildet, der eine Vielzahl von Bohrungen 16 aufweist, die zur Verschraubung mit einem Adapterelement dienen.

Das Bezugszeichen 18 kennzeichnet einen weiteren Befestigungsabschnitt, an dem beispielsweise Kupplungen angeordnet werden können. Diese Kupplungen können beispielsweise ein automatisches Lösen von Teilen der Blasform und insbesondere der Blasform vom Formträger ermöglichen. Das Bezugszeichen 14 kennzeichnet einen dritten Befestigungsabschnitt, der zur Anordnung eines weiteren Adapterelements dienen kann. Das Bezugszeichen 26 kennzeichnet einen Bodenträger, der zum Tragen des Bodenteils 2 dient.

Figur 1b zeigt die einzelnen Adapterelemente. Dabei bezieht sich das Bezugszeichen 22 auf das erste Adapterelement, welches an dem Befestigungsabschnitt 12 angeordnet wird. Dieses erste Adapterelement 22 weist dabei einen Zentrierstift 38 auf, der in eine entsprechende Bohrung des Seitenteils eingreift. Daneben sind zwei Greifvorsprünge 32 vorgesehen, welche von einem Roboterarm gegriffen werden können. Weiterhin weist das Adapterelement zwei seitliche Vorsprünge 34 auf, welche ebenfalls für das Handling mit einem Roboter dienen.

Bei einer bevorzugten Ausführungsform weist das Adapterelement 22 zwei Abschnitte 22a, 22b auf, welche jeweils an den beiden Seitenteilen 4, 6 befestigt werden können. Diese beiden Abschnitte 22a, 22b sind dabei bevorzugt jeweils halbkreisförmig ausgebildet.

Zum Zwecke eines Transports der Blasformen können diese Abschnitte 22a, 22b miteinander (insbesondere formschlüssig) verbunden werden, um so auch die beiden Seitenteile 4, 6 miteinander zu verbinden.

Das Bezugszeichen 28 kennzeichnet ein weiteres Adapterelement, welches insbesondere an dem Befestigungsabschnitt 18, der sich an dem Außenumfang der Blasform befindet, angeordnet wird. Mittels dieses Adapterelements können insbesondere Befestigungsmechanismen automatisch geschlossen und/oder gelöst werden.

Das Bezugszeichen 24 kennzeichnet das zweite Adapterelement, welches insbesondere an der Unterseite der Seitenteile befestigt werden kann. Dieses Adapterelement dient in erster Linie dazu, die Einheit aus Seitenteilen 4, 6 und Bodenteil auf einem Träger in der Blasstation anzuordnen. Dieses Adapterelement 24 kann dabei auch eine formschlüssige Verbindung zwischen den beiden Seitenteilen herstellen. Dabei erkennt man, dass auch dieses zweite Adapterelement 24 zweiteilig ausgebildet ist, wobei ein Teil 24a an einem Seitenteil befestigt wird und das andere Teil 24b an einem weiteren Seitenteil 6. Auch dieses zweite Adapterelement kann dabei derart ausgebildet sein, dass dessen beide Teile 24a, 24b miteinander verbunden werden können und/oder derart, dass diese Teile eine insbesondere formschlüssige Verbindung zwischen den Seitenteilen 4, 6 und dem Bodenteil 2 herstellen.

Figur 1c zeigt eine Blasform 1, welche mit den einzelnen Adapterelementen 22, 24 und 28 bestückt ist. Damit ist hier die oben erwähnte Blasformanordnung 10 dargestellt.

Figur 2 zeigt eine Blasform nach dem Stand der Technik. Man erkennt, dass diese Blasform keine Möglichkeit aufweist, um ein Adapterelement hieran zu befestigen.

Fig. 3 zeigt eine schematische Darstellung einer Blasform. Diese weist zwei Seitenteile 4 und 6 sowie ein Bodenteil 2 auf. Dieses Bodenteil 2 wird dabei von den beiden Seitenteilen gehalten, was insbesondere durch einen Formschluss erfolgen kann. Dabei sind in den Seitenteilen 4, 6 jeweils Fixiermittel zum Halten des Bodenteils 2 integriert.

### Bezugszeichenliste

- 1: Blasform
- 2: Bodenteil
- 4: erstes Seitenteil
- 6: zweites Seitenteil
- 10: Blasformanordnung
- 12: erster Befestigungsabschnitt
- 14: zweiter Befestigungsabschnitt
- 16: Bohrungen
- 18: dritter Befestigungsabschnitt
- 22: erstes Adapterelement
- 22a: Abschnitt des ersten Adapterelements 22
- 22b: Abschnitt des ersten Adapterelements 22
- 24: zweites Adapterelement
- 24a: Teil des zweiten Adapterelements
- 24b: Teil des zweiten Adapterelements
- 26: Bodenträger
- 28: weiteres Adapterelement
- 32: Greifvorsprünge
- 34: seitliche Vorsprünge
- 38: Zentrierstift
- 44: Blasformschalenelement, Trägerschale
- 46: Befestigungsabschnitt
- 50: Arretiermechanismus
- 52: Temperiermedienanschluss
- 54: Medienanschluss
- 55: weiteres Arretierelement
- 56: Medienanschluss
- 58: Medienanschluss

## Patentansprüche

1. Blasformanordnung (10) mit einer Blasform (1) und wenigstens einem Adapterelement (22) zum Umformen von Kunststoffvorformlingen zu Kunststoffbehältnissen, wobei die Blasform (1) ein Bodenteil (2), ein erstes Seitenteil (4) und ein zweites Seitenteil (6) aufweist, wobei dieses Bodenteil (2) mit den Seitenteilen (4, 6) in einem zusammengesetzten Zustand der Blasform (1) einen Hohlraum ausbildet, innerhalb dessen die Kunststoffvorformlinge zu den Kunststoffbehältnissen expandierbar sind,
**dadurch gekennzeichnet, dass**
wenigstens ein Element der Blasform (1) einen ersten Befestigungsabschnitt (12) aufweist, an dem ein erstes Adapterelement (22) anbringbar ist, wobei dieser Befestigungsabschnitt (12) derart ausgebildet ist, dass dieses Adapterelement (22) lösbar an diesem Befestigungsabschnitt (12) anbringbar ist, wobei dieser Befestigungsabschnitt (12) derart ausgebildet ist, dass die Blasform sowohl mit diesem Adapterelement (22) als auch ohne dieses Adapterelement (22) an einer Umformungseinrichtung zum Umformen von Kunststoffvorformlingen zu Kunststoffbehältnissen angeordnet werden kann, wobei eine Gestalt des Adapterelementes (22) an eine Gestalt der Blasform (1) angepasst ist und das Adapterelement (22) derart ausgeführt sein kann, dass es in komplementäre Gegenflächen der Blasform (1) eingreift und wobei dieser Befestigungsabschnitt (12) stufenförmig ausgebildet ist und/oder einen stufenförmigen Ansatz aufweist, an dem das Adapterelement (22) angeordnet wird.

2. Blasformanordnung (10) nach Anspruch 1,
**dadurch gekennzeichnet, dass**
wenigstens ein Seitenteil (4, 6) der Blasform (1) den Befestigungsabschnitt (12) aufweist.

3. Blasformanordnung (10) nach wenigstens einem der vorangegangenen Ansprüche,
**dadurch gekennzeichnet, dass**
das Adapterelement (22) ein Wechseln der Blasform (1) durch eine Robotereinrichtung ermöglicht.

4. Blasformanordnung (10) nach wenigstens einem der vorangegangenen Ansprüche,
**dadurch gekennzeichnet, dass**
das Bodenteil (2) und/oder ein Seitenteil (4, 6) einen zweiten Befestigungsabschnitt (14) aufweist, an dem ein zweites Adapterelement (24) anbringbar ist.

5. Blasformanordnung (10) nach wenigstens einem der vorangegangenen Ansprüche,
**dadurch gekennzeichnet, dass**
wenigstens ein Adapterelement (22, 24) mittels wenigstens einer Schraubverbindung an dem ihm zugeordneten Befestigungsabschnitt (12, 14) anbringbar ist.

6. Blasformanordnung (10) nach wenigstens einem der vorangegangenen Ansprüche,
**dadurch gekennzeichnet, dass**
wenigstens ein Befestigungsabschnitt (12, 14) eine kreissegmentförmige Anlagefläche zum Anlegen des Adapterelements (22, 24) aufweist.

7. Blasformanordnung (10) nach wenigstens einem der vorangegangenen Ansprüche,
**dadurch gekennzeichnet, dass**
wenigstens ein Befestigungsabschnitt (12, 14) in einem oberen Drittel der Blasform (1), bevorzugt einem oberen Viertel der Blasform (1) angeordnet ist.

8. Blasformanordnung (10) nach wenigstens einem der vorangegangenen Ansprüche,
**dadurch gekennzeichnet, dass**
die Blasform (1) wenigstens einen dritten Befestigungsabschnitt (18) aufweist, um an einer Umfangsfläche wenigstens eines Seitenteils (4, 6) ein drittes Adapterelement (28) zu befestigen.

9. Blasformanordnung (10) nach wenigstens einem der vorangegangenen Ansprüche,
**dadurch gekennzeichnet, dass**
wenigstens ein Adapterelement (22, 24, 28) wenigstens zweiteilig ausgebildet ist.

10. Blasformanordnung (10) nach wenigstens einem der vorangegangenen Ansprüche,
**dadurch gekennzeichnet, dass**
die Blasformanordnung (10) ein zweites oder weiteres Adapterelement (24, 28) aufweist, welches beanstandet zu dem ersten Adapterelement (22) an der Blasform (1) angeordnet werden kann.

## Claims

1. Blow moulding arrangement (10) with a blow mould (1) and at least one adapter element (22) for transforming plastic parisons to form plastic containers, wherein the blow mould (1) comprises a base part (2), a first side part (4) and a second side part (6), wherein, in the assembled state of the blow mould (1), this base part (2) together with the side parts (4, 6) form a hollow space, within which the plastic parisons can be expanded to form the plastic containers,
**characterised in that**
at least one element of the blow mould (1) to which a first adapter element (22) can be attached has a first fastening section (12), wherein this fastening section (12) is designed in such a way that this adapter element (22) can be releasably attached to this fastening section (12), wherein this fastening section (12) is formed in such a way that the blow mould can be arranged both with this adapter element (22) and also without this adapter element (22) on a transforming device for transforming plastic parisons to form plastic containers, wherein a configuration of the adapter element (22) is adapted to a configuration of the blow mould (1) and the adapter element (22) can be configured in such a way that it engages in complementary counterpart surfaces of the blow mould (1) and wherein this fastening section (12) has a stepped construction and/or a stepped shoulder, on which the adapter element (22) is arranged.

2. Blow moulding arrangement (10) according to claim 1,
**characterised in that**
at least one side part (4, 6) of the blow mould (1) has the fastening section (12).

3. Blow moulding arrangement (10) according to at least one of the preceding claims,
**characterised in that**
the adapter element (22) facilitates changing of the blow mould (1) by a robot device.

4. Blow moulding arrangement (10) according to at least one of the preceding claims,
**characterised in that**
the base part (2) and/or a side part (4, 6) has a second fastening section (14) to which a second adapter element (24) can be attached.

5. Blow moulding arrangement (10) according to at least one of the preceding claims,
**characterised in that**
at least one adapter element (22, 24) can be attached by means of at least one screw connection to the associated fastening section (12, 14).

6. Blow moulding arrangement (10) according to at least one of the preceding claims,
**characterised in that**
at least one fastening section (12, 14) has at least one bearing surface in the form of a circular segment for application of the adapter element (22, 24).

7. Blow moulding arrangement (10) according to at least one of the preceding claims,
**characterised in that**
at least one fastening section (12, 14) is arranged in an upper third of the blow mould (1), preferably an upper quarter of the blow mould (1).

8. Blow moulding arrangement (10) according to at least one of the preceding claims,
**characterised in that**
the blow mould (1) has at least one third fastening section (18) in order to fasten a third adapter element (28) to a circumferential surface of at least one side part (4, 6).

9. Blow moulding arrangement (10) according to at least one of the preceding claims,
**characterised in that**
at least one adapter element (22, 24, 28) is formed in at least two parts.

10. Blow mould arrangement (10) according to at least one of the preceding claims,
**characterised in that**
the blow mould arrangement (10) has a second or further adapter element (24, 28) which can be arranged spaced apart from the first adapter element (22) on the blow mould (1).

## Revendications

1. Ensemble à moule de soufflage (10) avec un moule de soufflage (1) et au moins un élément adaptateur (22) pour mettre en forme des préformes en matière plastique en contenants en matière plastique, dans lequel le moule de soufflage (1) présente une partie de fond (2), une première partie latérale (4) et une deuxième partie latérale (6), dans lequel ladite partie de fond (2) réalise avec les parties latérales (4, 6), dans un état assemblé du moule de soufflage (1), un espace creux, à l'intérieur duquel les préformes en matière plastique peuvent être expansées en les récipients en matière plastique,
**caractérisé en ce que**
au moins un élément du moule de soufflage (1) présente une première section de fixation (12), sur laquelle un premier élément adaptateur (22) peut être installé, dans lequel ladite section de fixation (12) est réalisée de telle manière que ledit élément adaptateur (22) peut être installé de manière amovible sur ladite section de fixation (12), dans lequel ladite section de fixation (12) est réalisée de telle manière que le moule de soufflage peut être disposé à la fois avec ledit élément adaptateur (22) et sans ledit élément adaptateur (22) sur un système de mise en forme pour mettre en forme des préformes en matière plastique en des contenants en matière plastique, dans lequel une configuration de l'élément adaptateur (22) est adaptée à une configuration du moule de soufflage (1) et l'élément adaptateur (22) peut être réalisé de telle manière qu'il vient en prise avec des contre-surfaces complémentaires du moule de soufflage (1) et dans lequel ladite section de fixation (12) est réalisée en forme de palier et/ou présente un appendice en forme de palier, sur lequel l'élément adaptateur (22) est disposé.

2. Ensemble à moule de soufflage (10) selon la revendication 1,
**caractérisé en ce que**
au moins une partie latérale (4, 6) du moule de soufflage (1) présente la section de fixation (12).

3. Ensemble à moule de soufflage (10) selon au moins l'une quelconque des revendications précédentes,
**caractérisé en ce que**
l'élément adaptateur (22) permet un remplacement du moule de soufflage (1) par un système robotisé.

4. Ensemble à moule de soufflage (10) selon au moins l'une quelconque des revendications précédentes,
**caractérisé en ce que**
la partie de fond (2) et/ou une partie latérale (4, 6) présentent une deuxième section de fixation (14), sur laquelle un deuxième élément adaptateur (24) peut être installé.

5. Ensemble à moule de soufflage (10) selon au moins l'une quelconque des revendications précédentes,
**caractérisé en ce que**
au moins un élément adaptateur (22, 24) peut être installé sur la section de fixation (12, 14) qui lui est associée au moyen d'au moins une liaison par vissage.

6. Ensemble à moule de soufflage (10) selon au moins l'une quelconque des revendications précédentes,
**caractérisé en ce que**
au moins une section de fixation (12, 14) présente une surface d'appui en forme de segment circulaire pour placer l'élément adaptateur (22, 24).

7. Ensemble à moule de soufflage (10) selon au moins l'une quelconque des revendications précédentes,
**caractérisé en ce que**
au moins une section de fixation (12, 14) est disposée dans un tiers supérieur du moule de soufflage (1), de manière préférée un quart supérieur du moule de soufflage (1).

8. Ensemble à moule de soufflage (10) selon au moins l'une quelconque des revendications précédentes,
**caractérisé en ce que**
le moule de soufflage (1) présente au moins une troisième section de fixation (18) pour fixer sur une surface périphérique d'au moins une partie latérale (4, 6) un troisième élément adaptateur (28).

9. Ensemble à moule de soufflage (10) selon au moins l'une quelconque des revendications précédentes,
**caractérisé en ce que**
au moins un élément adaptateur (22, 24, 28) est réalisé au moins en deux parties.

10. Ensemble à moule de soufflage (10) selon au moins l'une quelconque des revendications précédentes,
**caractérisé en ce que**
l'ensemble à moule de soufflage (10) présente un deuxième ou un autre élément adaptateur (24, 28), lequel peut être disposé sur le moule de soufflage (1) à distance par rapport au premier élément adaptateur (22).
